# EUROPEAN PATENT APPLICATION

(11) **EP 4 773 608 A1**
(43) Date of publication of application: **08.07.2026**
(21) Application number: 24923505.2
(22) Date of filing: 09.12.2024
(51) Int. Cl.: H04N 19/51

(54) **OPTIMAL MOTION VECTOR DETERMINATION METHOD AND APPARATUS, AND DEVICE AND STORAGE MEDIUM**

(30) Priority: 08.02.2024 CN 202410177374
(71) Applicant: ZTE Corporation, Shenzhen, Guangdong 518057 (CN)
(72) Inventor: NIU, Weihong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/137689
(87) International publication number: WO 2025/167303

(57) **Abstract**

Provided in the present disclosure are an optimal motion vector(MV) determination method and apparatus, and a device and a storage medium. The optimal MV determination method comprises: acquiring a first direction set, wherein the first direction set comprises some search directions in a preset direction set; determining the rate distortion optimization (RDO) cost of a target pixel block in each search direction in the first direction set, so as to obtain a plurality of first RDO costs, and when the plurality of first RDO costs are all greater than or equal to an initial RDO cost corresponding to an initial MV of the target pixel block, using the initial MV as an optimal MV of the target pixel block.

## Description

The present disclosure claims priority to the Chinese Patent Application No. 202410177374.4, filed on February 8, 2024, the entire content of which is incorporated herein by reference.

### TECHNICAL FIELD

The present disclosure relates to the technical field of video encoding, and in particular, to an optimal motion vector determination method and apparatus, a device and a storage medium.

### BACKGROUND

With the enrichment of video scenarios, a data volume of a video also increases accordingly, and in order to improve the transmission efficiency of the video, it is usually necessary to perform video encoding processes such as acquisition, prediction, transform, and entropy encoding on video data, to reduce the data volume of the video.

Currently, prediction encoding modes for a video image generally include a conventional merge mode (i.e., merge mode), a merge with motion vector difference (MMVD) mode applied in the merge mode, and GPM-MMVD where MMVD is applied based on the geometric partitioning mode (GPM), etc. The prediction encoding process for the video image needs to predict an optimal motion vector (MV) of a current pixel block, and then encode based on the optimal motion vector.

### SUMMARY

The embodiments of the present disclosure provide an optimal motion vector determination method and apparatus, a device, and a storage medium.

In an aspect, an optimal motion vector determination method is provided, and the method includes: acquiring a first direction set, where the first direction set includes a part of search directions in a preset direction set; determining a rate distortion optimization (RDO) cost of a target pixel block in each search direction in the first direction set, to obtain a plurality of first RDO costs; and in response that the plurality of first RDO costs are all greater than or equal to an initial RDO cost corresponding to an initial motion vector (MV) of the target pixel block, using the initial MV as an optimal MV of the target pixel block.

In another aspect, an optimal motion vector determination apparatus is provided, and the apparatus includes: an acquisition module and a processing module.

The acquisition module is configured to acquire a first direction set, where the first direction set includes a part of search directions in a preset direction set. The processing module is configured to determine a rate distortion optimization (RDO) cost of a target pixel block in each search direction in the first direction set, to obtain a plurality of first RDO costs. The processing module is further configured to: in response that the plurality of first RDO costs are all greater than or equal to an initial RDO cost corresponding to an initial motion vector (MV) of the target pixel block, use the initial MV as an optimal MV of the target pixel block.

In yet another aspect, a network device is provided, including: a memory and a processor. The memory and the processor are coupled. The memory is configured to store a computer program. The processor, upon executing the computer program, implements the optimal motion vector determination method according to any one of the above aspects or embodiments.

In yet another aspect, a computer-readable storage medium is provided. The computer-readable storage medium stores computer program instructions, where the computer program instructions, upon being executed by a processor, implement the optimal motion vector determination method according to any one of the above aspects or embodiments.

In another aspect, a computer program product is provided. The computer program product includes computer program instructions, and the computer program instructions, upon being executed by a processor, implement the optimal motion vector determination method according to any one of the above aspects or embodiments.

### BRIEF DESCRIPTION OF THE DRAWINGS

In order to more clearly illustrate the technical solutions in the present disclosure, the following will briefly introduce the drawings required for use in some embodiments of the present disclosure, and obviously, the drawings in the following description are only drawings of some embodiments of the present disclosure, and for those ordinary skilled in the art, other drawings may also be obtained based on these drawings.
FIG. 1 is a video coding framework flowchart provided in some embodiments of the present disclosure.
FIG. 2 is a schematic diagram of a system architecture of an electronic device provided in some embodiments of the present disclosure.
FIG. 3 is a flow schematic diagram of an optimal motion vector determination method provided in some embodiments of the present disclosure.
FIG. 4 is a flow schematic diagram of another optimal motion vector determination method provided in some embodiments of the present disclosure.
FIG. 5 is a schematic diagram of an instance of an optimal motion vector determination method provided in some embodiments of the present disclosure.
FIG. 6 is a structural schematic diagram of an optimal motion vector determination apparatus provided in some embodiments of the present disclosure.
FIG. 7 is a structural schematic diagram of an optimal motion vector determination device provided in some embodiments of the present disclosure.

### DETAILED DESCRIPTION

Below, the technical solutions in the present disclosure will be described clearly and completely in combination with the drawings in the present disclosure, and obviously, the described embodiments are only a part of the embodiments of the present disclosure, not all of the embodiments. Based on the embodiments in the present disclosure, all other embodiments obtained by those ordinary skilled in the art without creative work belong to the scope of protection of the present disclosure.

It should be noted that, in the present disclosure, words such as "exemplarily" or "for example/such as/e.g." are used to represent examples, illustrations, or explanations. Any embodiment or design solution described with "exemplarily" or "for example/such as/e.g." in the present disclosure should not be interpreted as being more preferable or advantageous than other embodiments or design solutions. Precisely, the use of words such as "exemplarily" or "for example/such as/e.g." is intended to present relevant concepts in an example manner.

Hereinafter, terms such as "first" and "second" are used for descriptive purposes only and cannot be understood as indicating or implying relative importance or implicitly indicating the number of the indicated technical features. Thus, features defined with "first", "second", etc., may explicitly or implicitly include one or more of such features.

In the description of the present disclosure, unless otherwise specified, "/" means "or", for example, A/B may represent A or B. The "and/or" herein is merely a description of an association relationship of associated objects, indicating that three relationships may exist, for example, A and/or B may represent: only A, only B, and both A and B. Furthermore, "at least one" refers to one or more, and "multiple/plurality of" refers to two or more.

Before detailing the optimal motion vector determination method provided in the embodiments of the present disclosure, the implementation environments and application scenarios of the embodiments of the present disclosure are first introduced.

First, the application scenarios of the embodiments of the present disclosure are introduced.

With the increasing richness of video scenarios, a traditional square coding unit (CU) can no longer perform prediction accurately, for which GPM emerges. GPM can perform partitioning at multiple angles, which may adapt to more complex textures and enable better encoding for a part of regions. GPM-MMVD applies MMVD based on the GPM mode, which is intended to further improve MV precision, thereby obtaining a more precise prediction image, smaller residual, for encoding.

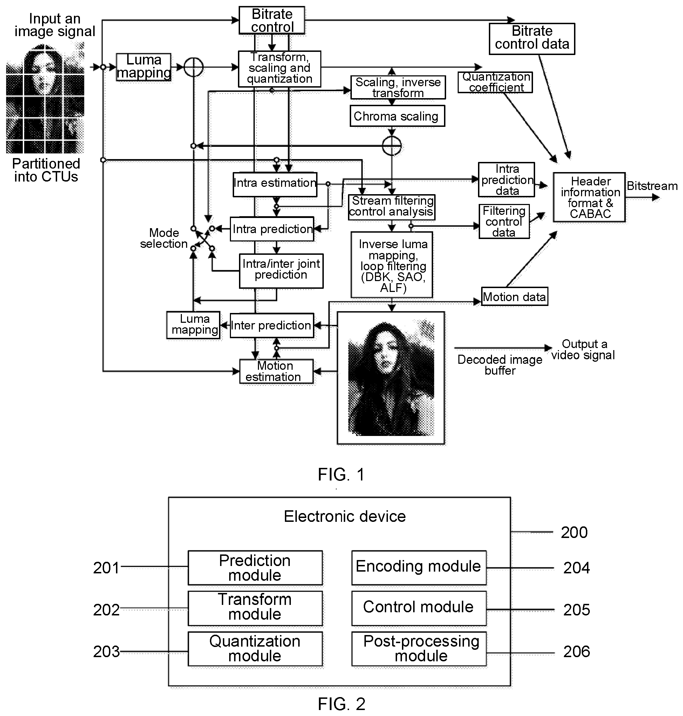

In a video encoding framework flowchart shown in FIG. 1, an original luma chroma (YUV) image (or video) may be encoded and compressed through several key functional modules including prediction, transform, quantization, entropy encoding, code rate control, and post-processing. Encoding and compressing the image (or video) is mainly performed from two perspectives: temporal redundancy and spatial redundancy. For example, temporal redundancy is mainly implemented by comparing similarities and differences between two frames in time, and transmitting differences between these two frames, which is mainly implemented through an inter prediction module. Spatial redundancy is mainly implemented by encoding and compressing data within a same frame, which is mainly implemented through an intra prediction module. The difference between the prediction reconstructed image and the original image, i.e., the residual, is further reduced in redundancy, through transform and quantization, and then binary encoded through entropy encoding. Finally, problems such as blocking artifacts are eliminated through post-processing modules such as deblocking artifact filtering and sample adaptive offset.

However, in the current latest generation video encoding enhanced compression model (ECM), the GPM technology of the previous generation versatile video encoding (versatile video coding, VVC) is still used, specifically used to address the problem that prediction cannot be performed on some square CUs more accurately. In ECM, a fast geometric partitioning mode with merge motion vector differences (GPM-MMVD) based on machine learning is adopted to further optimize GPM, but due to the high complexity of GPM-MMVD, the complexity of the part suddenly increases.

That is, existing GPM-MMVD does not yet have a fast algorithm; the existing GPM-MMVD results in extremely high complexity, due to its 8 search directions, 9 candidate distances, and a total of 72 candidate MV traversals. Moreover, 72 candidate MV traversals need to be performed on each of two partitioning regions of GPM, i.e., there are a total of 144 combinations, meaning that 144 calculations for RDO costs need to be performed, so it is conceivable that the complexity is extremely high and it is very unfriendly for the field requiring low latency and real-time transmission.

To solve the above problems, the embodiments of the present disclosure provide an optimal motion vector determination method. The optimal motion vector determination method provided in the embodiments of the present disclosure is applied to scenarios where an optimal MV is determined in GPM-MMVD, such as scenarios of sportscasts, webcasts, etc., which require low latency, high transmission efficiency, or more GPM partitioning modes (i.e., where the complexity of the encoder is higher). For example, an early termination method is adopted for 8 search directions, that is, 4 candidate directions in upper, lower, left, and right are first traversed, and if there is a candidate direction among these 4 candidate directions that the RDO cost is reduced, and after these 4 candidate directions are traversed, the remaining 4 candidate directions in upper-left, upper-right, lower-left, and lower-right continue to be traversed; where, during traversals of 9 candidate distances in a certain candidate direction, relevant features are first extracted, to input into a binary classification network, and based on the output of the network, only fractional pixels (1/4 pixel, 1/2 pixel) or integer pixels (1 pixel, 2 pixels, 3 pixels, 4 pixels, 6 pixels, 8 pixels, and 16 pixels) are traversed. In this way, most of the redundant RDO calculation processes may be omitted, thereby reducing the prediction complexity of determining the optimal MV in GPM-MMVD.

Below, the implementation environments of the embodiments of the present disclosure are introduced.

As shown in FIG. 2, it is a schematic diagram of a system architecture of an electronic device provided in the embodiments of the present disclosure. The electronic device 200 may include: a prediction module 201, a transform module 202, a quantization module 203, an encoding module 204, a control module 205, and a post-processing module 206.

The transform module 202 may perform coding tree unit (CTU) partitioning on original YUV in an input image signal, and perform luma mapping, transform and inverse transform, scaling and chroma scaling processing on the partitioned CTUs.

The prediction module 201 may perform inter estimation, inter prediction, intra prediction, intra/inter joint prediction, and motion estimation on an output result of the transform module 202 through mode selection, to obtain corresponding intra prediction data and motion data.

The quantization module 203 may perform quantization processing on the output result of the transform module 202, to obtain a corresponding quantization coefficient.

The post-processing module may perform inverse luma mapping and loop filtering processing on the output result of the transform module 202 through filtering control analysis, to obtain corresponding filtering control data. The loop filtering processing may be implemented based on a deblocking filter (DBF), a sample adaptive offset (SAO), and/or an adaptive loop filter (ALF).

The control module 205 may perform code rate control on the output result of the transform module 202, to obtain corresponding code rate control data.

The encoding module 204 may generate a bitstream in a header information format, through an entropy encoding method of context-adaptive binary arithmetic encoding (context-adaptive binary arithmetic coding, CABAC), based on the code rate control data, the quantization coefficient, the intra prediction data, the filtering control data, and motion data from the above modules, to implement encoding and compression of the image signal. Moreover, the encoding module 204 may output a video signal through a decoded picture buffer.

In the embodiments of the present disclosure, the electronic device 200 may perform encoding and compression on the video through the video encoding framework flow shown in FIG. 1.

It should be noted that the embodiments of the present disclosure do not limit the electronic device 200. For example, the electronic device 200 may be a terminal, or the electronic device 200 may be a server.

The terminal may be a device with a transceiver function, such as a mobile phone, a tablet computer, a desktop, a laptop, a handheld computer, a notebook computer, an ultra-mobile personal computer (UMPC), a netbook, etc., and the embodiments of the present disclosure do not impose special limitations on the specific form of the terminal. It may perform human-computer interaction with users through one or more methods such as a keyboard, a touch pad, a touch screen, a remote control, voice interaction, or a handwriting device, etc.

The server may be a separate physical server, or may be a server cluster composed of multiple servers. Alternatively, the server cluster may also be a distributed cluster. Alternatively, the server may be a cloud server. The embodiments of the present disclosure do not limit the specific implementations of the server.

After introducing the application scenarios and implementation environments of the embodiments of the present disclosure, the optimal motion vector determination method provided in the embodiments of the present disclosure will be detailed below in combination with the above implementation environments.

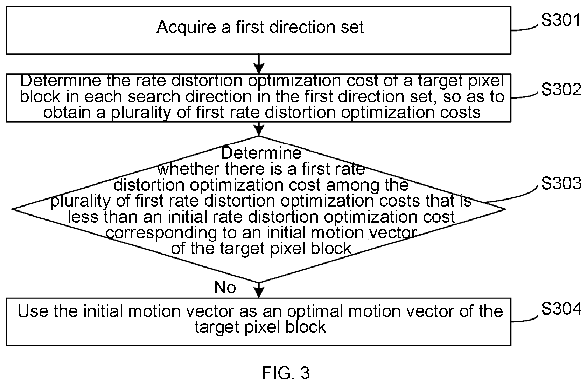

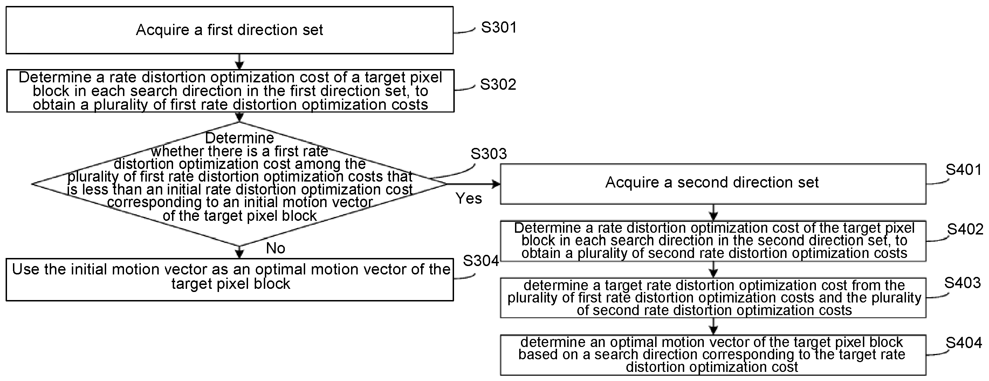

The embodiments of the present disclosure provide an optimal motion vector determination method, as shown in FIG. 3, and the optimal motion vector determination method may include: S301 to S304.

S301: acquire a first direction set.

The first direction set includes a part of search directions in a preset direction set.

As a possible implementation, the preset direction set may include all search directions of GPM-MMVD.

That is, during the prediction encoding of a pixel block, using search directions of GPM-MMVD for prediction encoding, is intended to further improve the MV precision of the pixel block, thereby obtaining a more precise prediction result and reducing the residual of the pixel block in prediction encoding.

It should be noted that, in the embodiments of the present disclosure, the search directions of GPM-MMVD may be classified into cardinal directions and diagonal directions.

As a possible implementation, the first direction set may include all cardinal directions in the preset direction set.

Exemplarily, all search directions of the GPM-MMVD may include four cardinal directions: upper, lower, left, right, and four diagonal directions: upper-left, upper-right, lower-left, and lower-right, so the first direction set may include the four directions: upper, lower, left, and right.

It may be understood that, when performing prediction encoding on a pixel block, a reference is provided for the subsequent prediction of an optimal MV of the pixel block, by selecting primary search directions (i.e., the cardinal directions) from all search directions of the GPM-MMVD. In this way, the calculation of the RDO costs of secondary search directions may be avoided, thereby omitting most of the redundant calculation processes for RDO costs in the GPM-MMVD, and reducing the computational complexity of the GPM-MMVD.

As a possible implementation, the first direction set may be acquired by receiving a search direction in the first direction set input by a user.

As another possible implementation, the first direction set may be acquired from a storage space in which the first direction set is pre-stored.

That is, the embodiments of the present disclosure do not limit the acquisition method for the first direction set. In this way, the operability of acquiring the first direction set may be improved.

S302: determine a rate distortion optimization cost of a target pixel block in each search direction in the first direction set, to obtain a plurality of first rate distortion optimization costs.

As a possible implementation, a plurality of preset search distances are stored. Based on a first search direction in the first direction set and each preset search distance, an RDO cost of the target pixel block in the first search direction among a plurality of first RDO costs may be calculated, to obtain a plurality of third RDO costs corresponding to the first search direction. A third RDO cost corresponds to a preset search distance.

Exemplarily, the stored plurality of preset search distances include: 1 pixel, 2 pixels, 3 pixels, 4 pixels, 6 pixels, and 8 pixels. If the first search direction is the lower-left direction, a plurality of third RDO costs corresponding to the lower-left direction may be determined: RDO cost A, RDO cost B, RDO cost C, RDO cost D, RDO cost E, and RDO cost F. RDO cost A is the RDO cost of the target pixel block in the lower-left direction at a distance of 1 pixel, RDO cost B is the RDO cost of the target pixel block at the lower-left direction at a distance of 2 pixels, RDO cost C is the RDO cost of the target pixel block at the lower-left direction at a distance of 3 pixels, RDO cost D is the RDO cost of the target pixel block at the lower-left direction at a distance of 4 pixels, RDO cost E is the RDO cost of the target pixel block at the lower-left direction at a distance of 6 pixels, and RDO cost F is the RDO cost of the target pixel block at the lower-left direction at a distance of 8 pixels.

It should be noted that, during calculating RDO costs of the pixel block in a search direction, the calculation of RDO costs is usually performed based on each preset search distance in this search direction. That is, a search direction corresponds to a plurality of preset search distances, each search distance participates in calculation of an RDO cost in this search direction, and the number of RDO costs of the pixel block in a search direction is equal to the number of preset search distances in this search direction. In this way, in a case where the number of preset search distances is large, the calculation amount of RDO costs will increases, thereby leading to higher computational complexity of the GPM-MMVD.

As a possible implementation, a plurality of pixel block feature information of the target pixel block in a target search direction may be acquired, and a plurality of target search distances in the target search direction may be determined based on the plurality of pixel block feature information. Next, for each target search distance, based on the target search distance and the target search direction, a first RDO cost of the target pixel block in the target search direction and at the target search distance may be determined, to obtain a plurality of first RDO costs of the target pixel block in the target search direction. The target search direction is any search direction in the first direction set, and a target search distance corresponds to a first RDO cost.

It may be understood that, when calculating the RDO costs of the pixel block in each search direction, a part of search distances may be selected from all search distances in the corresponding search direction, based on pixel block feature information of the pixel block in each search direction, and then, based on each search direction and the selected part of search distances in each search direction, RDO costs of the pixel block in each search direction and at the selected search distances may be calculated. In this way, the calculation amount of RDO costs of the pixel block may be reduced, thereby reducing the computational complexity of the GPM-MMVD.

It should be noted that, in the embodiments of the present disclosure, the plurality of pixel block feature information may include at least one of the following information: a gradient value, a standard deviation, and an absolute error sum.

That is, by acquiring feature information such as gradient values, standard deviations, and absolute error sums of sub-pixel blocks of the pixel block in a search direction, a reference is provided for selecting a part of search distances in the search direction, thereby improving the accuracy of the selected search distances, and then providing an accurate RDO cost reference for the subsequent determination of an optimal motion vector of the pixel block.

As a possible implementation, a trained binary classification network model is deployed. During determining a plurality of target search distances in the target search direction based on the plurality of pixel block feature information, the plurality of pixel block feature information may be input into the trained binary classification network model to obtain the plurality of target search distances.

It may be understood that, by training the binary classification network model, an association relationship between pixel block feature information and search directions is established, so as to provide a basis for subsequent selection of a part of search distances of the pixel block in the search direction, thereby improving the accuracy of the selected search distances. Furthermore, since the output result of the binary classification network model has only two types of results, all the plurality of search distances determined by the trained binary classification network model are the same type of search distances. In this way, it may be ensured that all RDO costs of the pixel block in a search direction are calculated based on the same type of search distances, thereby reducing differences between the RDO costs of the pixel block in the search direction.

It should be noted that, in the embodiments of the present disclosure, the plurality of target search distances are all based on the integer pixel precision of the GPM-MMVD, or the plurality of target search distances are all based on the fractional pixel precision of the GPM-MMVD.

That is, the type of search distances may be determined based on the pixel precision.

S303: determine whether there is a first rate distortion optimization cost among the plurality of first rate distortion optimization costs that is less than an initial rate distortion optimization cost corresponding to an initial motion vector of the target pixel block.

In some embodiments, in a case where it is determined that the plurality of first RDO costs are all greater than or equal to the initial RDO cost, S304 is performed.

S304: use the initial motion vector as an optimal motion vector of the target pixel block.

It may be understood that, when performing prediction encoding on the pixel block, RDO costs of a part of search directions in the preset direction set may be determined first. Afterwards, the RDO costs of the part of search directions may be compared with the initial RDO cost corresponding to the initial MV of the pixel block. In a case where the RDO costs of the part of search directions are all greater than or equal to the initial RDO cost, the initial motion vector of the pixel block is used as the optimal MV of the pixel block. In this way, the optimal MV may be obtained by determining the RDO costs of only the part of search directions. Thus, the calculation amount of RDO costs of the pixel block may be reduced, so as to improve the prediction efficiency for the optimal MV of the pixel block.

In some embodiments, as shown in FIG. 4, after S303, in a case where it is determined that there is a first RDO cost among the plurality of first RDO costs that is less than the initial RDO cost, the optimal motion vector determination method may further include S401 to S404.

S401: acquire a second direction set.

The second direction set includes at least one search direction in the preset direction set other than the first direction set.

As a possible implementation, the second direction set may include all diagonal directions in the preset direction set.

It may be understood that, when it is determined that the primary search directions selected in the GPM-MMVD cannot provide a reference for the prediction of the optimal MV of the pixel block, secondary search directions (i.e., diagonal directions) in the GPM-MMVD may be selected, so as to provide more references for the prediction of the optimal MV of the pixel block, thereby improving the accuracy of predicting the optimal MV of the pixel block.

S402: determine a rate distortion optimization cost of the target pixel block in each search direction in the second direction set, to obtain a plurality of second rate distortion optimization costs.

It should be noted that, for the process of determining the rate distortion optimization cost of the target pixel block in each search direction in the second direction set to obtain a plurality of second rate distortion optimization costs, reference may be made to the introduction for determining the first RDO costs of the target pixel block in the above S302, which will not be repeated here.

S403: determine a target rate distortion optimization cost from the plurality of first rate distortion optimization costs and the plurality of second rate distortion optimization costs.

The target RDO cost is a smallest RDO cost among the plurality of first RDO costs and the plurality of second RDO costs.

S404: determine an optimal motion vector of the target pixel block based on a search direction corresponding to the target rate distortion optimization cost.

It may be understood that, when the selected part of search directions cannot provide a reference for prediction of the optimal MV of the pixel block, the remaining search directions may be selected to provide more references for prediction of the optimal MV of the pixel block, and a search direction with the smallest rate distortion optimization cost among all the selected search directions is used as the optimal MV of the pixel block. In this way, by performing calculation of RDO costs in batches for all search directions, the calculation amount of the RDO costs of the pixel block may be reduced while ensuring the accuracy of predicting the optimal MV of the pixel block.

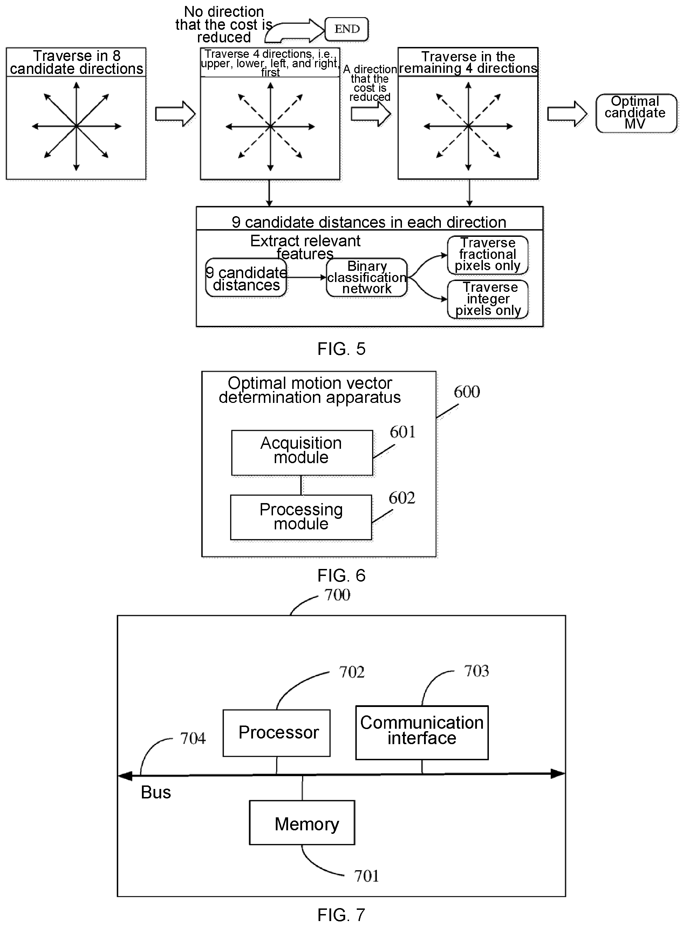

Below, the optimal motion vector determination method provided in the embodiments of the present disclosure is introduced in conjunction with some examples. As shown in FIG. 5, candidate directions of the pixel block include 8 search directions, and each search direction has 9 candidate distances, resulting in a total of 72 combinations.

For example, four candidate directions, i.e., upper, lower, left, and right (i.e., the search directions in the first direction set), are traversed first.

During the traversal of each candidate direction, there are a total of 9 candidate distances available for selection. Relevant features (i.e., the pixel block feature information) are extracted and input into a binary classification network (the trained binary classification network model), and according to the output of the network, it is determined to traverse only fractional pixels (1/4 pixel, 1/2 pixel) or integer pixels (1 pixel, 2 pixels, 3 pixels, 4 pixels, 6 pixels, 8 pixels, 16 pixels).

If there is a direction that the RDO cost is reduced, among the four candidate directions, i.e., upper, lower, left, and right (i.e., there is a first RDO cost among the plurality of first RDO costs that is less than the initial RDO cost), the remaining four candidate directions, i.e., upper-left, upper-right, lower-left, and lower-right, continue to be traversed; otherwise, the traversal is terminated, until the optimal candidate MV (i.e., the optimal MV) is determined.

It may be understood that the embodiments of the present disclosure may effectively reduce the encoding complexity, maintain the decoding complexity unchanged, without transmitting the corresponding index to the decoder side. In this way, the prediction efficiency for the optimal MV of the pixel block may be improved.

It may be understood that, in order to implement the above functions, the optimal motion vector determination apparatus includes corresponding hardware structures and/or software modules for performing respective functions. Those skilled in the art may easily appreciate that, in combination with the algorithm steps of each example described in the embodiments of the present disclosure, the present disclosure can be implemented in hardware or a combination of hardware and computer software. Whether a certain function is performed by hardware or by computer software driving hardware, depends on the specific applications and design constraints of the technical solutions. Professionals may use different methods for respective specific applications to implement the described functions, but such an implementation should not be considered beyond the scope of the present disclosure.

In the embodiments of the present disclosure, the optimal motion vector may be divided into function modules according to the method embodiments described above, for example, each functional module may be divided corresponding to each function, or two or more functions may be integrated into a functional module. The above-mentioned integrated module may be implemented in the form of hardware or software. It should be noted that the division of modules in the embodiments of the present disclosure is illustrative, and is merely a logical functional division, and there may be other division methods in actual implementations. The following is an example of dividing each functional module corresponding to each function, for illustration.

FIG. 6 is a structural schematic diagram of an optimal motion vector determination apparatus provided in the embodiments of the present disclosure, and the optimal motion vector determination apparatus 600 may perform the optimal motion vector determination method shown in FIG. 3 or FIG. 4 in the above method embodiments. As shown in FIG. 6, the optimal motion vector determination apparatus 600 includes: an acquisition module 601 and a processing module 602.

The acquisition module 601 is configured to acquire a first direction set, where the first direction set includes a part of search directions in a preset direction set. The processing module 602 is configured to determine a rate distortion optimization (RDO) cost of a target pixel block in each search direction in the first direction set, to obtain a plurality of first RDO costs. The processing module 602 is further configured to: in response that the plurality of first RDO costs are all greater than or equal to an initial RDO cost corresponding to an initial motion vector (MV) of the target pixel block, use the initial MV as an optimal MV of the target pixel block.

In some embodiments, the acquisition module 601 is further configured to: in response that there is a first RDO cost among the plurality of first RDO costs less than the initial RDO cost, acquire a second direction set, where the second direction set includes at least one search direction in the preset direction set other than the first direction set. The processing module 602 is further configured to determine an RDO cost of the target pixel block in each search direction in the second direction set, to obtain a plurality of second RDO costs. The processing module 602 is further configured to determine a target RDO cost from the plurality of first RDO costs and the plurality of second RDO costs, where the target RDO cost is a smallest RDO cost among the plurality of first RDO costs and the plurality of second RDO costs, and the processing module 602 is further configured to determine an optimal MV of the target pixel block based on a search direction corresponding to the target RDO cost.

In some embodiments, the acquisition module 601 may be configured to acquire a plurality of pixel block feature information of the target pixel block in a target search direction, where the target search direction is any search direction in the first direction set. The processing module 602 is further configured to determine a plurality of target search distances of the target search direction according to the plurality of pixel block feature information. The processing module 602 is further configured to determine a first RDO cost of the target pixel block in the target search direction and at a target search distance, according to the target search distance and the target search direction.

In some embodiments, the processing module 602 may be configured to input the plurality of pixel block feature information into a trained binary classification network model, to obtain the plurality of target search distances.

In some embodiments, the plurality of target search distances are all of integer pixel precision of geometric partitioning mode with merge motion vector differences (GPM-MMVD), or the plurality of target search distances are all of fractional pixel precision of GPM-MMVD.

In some embodiments, the plurality of pixel block feature information include at least one of following information: a gradient value, a standard deviation, and an absolute error sum.

In some embodiments, the preset direction set includes all search directions of GPM-MMVD.

In some embodiments, the first direction set may include all cardinal directions in the preset direction set, and the second direction set may include all diagonal directions in the preset direction set.

In a case where the functions of the above integrated modules are implemented in hardware, the embodiments of the present disclosure provide another possible network device structure for the optimal motion vector determination apparatus involved in the above embodiments. As shown in FIG. 7, the optimal motion vector determination device 700 includes: a processor 702, and a bus 704. In some embodiments, the optimal motion vector determination device 700 may further include a memory 701; in some embodiments, the optimal motion vector determination device 700 may further include a communication interface 703.

The processor 702 may implement or perform various exemplary logical blocks, modules and circuits described in conjunction with the embodiments of the present disclosure. The processor 702 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 702 may also be a combination that implements computing functions, for example, including a combination of one or more microprocessors, a combination of a digital signal processor (DSP) and a microprocessor, or the like.

The communication interface 703 is configured to connect with other devices via a communication network. The communication network may be an Ethernet, a radio access network, a wireless local area network (WLAN), or the like.

The memory 701 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 701 may exist independently of the processor 702, and the memory 701 may be connected to the processor 702 via the bus 704 and is used for storing instructions or program codes. The processor 702, when calling and executing the instructions or program codes stored in the memory 701, is capable of implementing the optimal motion vector determination method provided by the embodiments of the present disclosure.

In another possible implementation, the memory 701 may also be integrated with the processor 702.

The bus 704 may be an extended industry standard architecture (EISA) bus or the like. Buses 704 may be divided into address buses, data buses, control buses, and the like. For the convenience of representation, only one thick line is used in FIG. 7 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the optimal motion vector determination method described in any embodiment of the above embodiments.

Exemplarily, the above-mentioned computer-readable storage medium may include, but be not limited to, a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the optimal motion vector determination method described in any embodiment of the above embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of the claims.

## Claims

1. An optimal motion vector determination method, **characterized by** comprising:
acquiring a first direction set, wherein the first direction set comprises a part of search directions in a preset direction set;
determining a rate distortion optimization (RDO) cost of a target pixel block in each search direction in the first direction set, to obtain a plurality of first RDO costs; and
in response that the plurality of first RDO costs are all greater than or equal to an initial RDO cost corresponding to an initial motion vector (MV) of the target pixel block, using the initial MV as an optimal MV of the target pixel block.

2. The method according to claim 1, further comprising:
in response that there is a first RDO cost among the plurality of first RDO costs less than the initial RDO cost, acquiring a second direction set, wherein the second direction set comprises at least one search direction in the preset direction set other than the first direction set;
determining an RDO cost of the target pixel block in each search direction in the second direction set, to obtain a plurality of second RDO costs;
determining a target RDO cost from the plurality of first RDO costs and the plurality of second RDO costs, wherein the target RDO cost is a smallest RDO cost among the plurality of first RDO costs and the plurality of second RDO costs; and
determining an optimal MV of the target pixel block based on a search direction corresponding to the target RDO cost.

3. The method according to claim 1, wherein determining the RDO cost of the target pixel block in each search direction in the first direction set, to obtain the plurality of first RDO costs, comprises:
acquiring a plurality of pixel block feature information of the target pixel block in a target search direction, wherein the target search direction is any search direction in the first direction set;
determining a plurality of target search distances of the target search direction according to the plurality of pixel block feature information; and
determining a first RDO cost of the target pixel block in the target search direction and at a target search distance, according to the target search distance among the plurality of target search distances and the target search direction.

4. The method according to claim 3, wherein determining the plurality of target search distances according to the plurality of pixel block feature information, comprises:
inputting the plurality of pixel block feature information into a trained binary classification network model, to obtain the plurality of target search distances.

5. The method according to claim 4, wherein
the plurality of target search distances are all of integer pixel precision of geometric partitioning mode with merge motion vector differences (GPM-MMVD); or
the plurality of target search distances are all of fractional pixel precision of GPM-MMVD.

6. The method according to claim 3, wherein the plurality of pixel block feature information comprise at least one of following information: a gradient value, a standard deviation, and an absolute error sum.

7. The method according to claim 1, wherein the preset direction set comprises all search directions of GPM-MMVD.

8. The method according to claim 1, wherein the first direction set comprises all cardinal directions in the preset direction set, and the second direction set comprises all diagonal directions in the preset direction set.

9. An electronic device, **characterized by** comprising: a memory and a processor; wherein the memory and the processor are coupled; the memory is configured to store instructions executable by the processor; and the processor, upon executing the instructions, is configured to perform the method according to any one of claims 1 to 8.

10. A computer-readable storage medium, **characterized in that** computer instructions are stored on the computer-readable storage medium, and the computer instructions, upon running on a computer, cause the computer to perform the method according to any one of claims 1 to 8.
